# EUROPEAN PATENT APPLICATION

(11) **EP 4 135 407 A1**
(43) Date of publication of application: **15.02.2023**
(21) Application number: 21800778.9
(22) Date of filing: 09.04.2021
(51) Int. Cl.: H04W 48/00, H04W 48/16, H04W 48/18, H04W 60/00, H04W 76/10

(54) **CALLED DOMAIN SELECTION METHOD AND APPARATUS**

(30) Priority: 07.05.2020 CN 202010377405
(71) Applicant: Huawei Technologies Co., Ltd., Longgang Shenzhen, Guangdong 518129 (CN)
(72) Inventor: CHEN, Jing, Shenzhen, Guangdong 518129 (CN); CHEN, Xiayun, Shenzhen, Guangdong 518129 (CN)
(74) Representative: Gill Jennings & Every LLP
(86) International application number: PCT/CN2021/086242
(87) International publication number: WO 2021/223568

(57) **Abstract**

This application provides a terminating access domain selection method and an apparatus. The method includes: A first node obtains information that is determined by one or more SMNs and that is for selecting a terminating access domain of a terminal device, and determines, based on the information that is determined by each of the one or more SMNs and that is for selecting the terminating access domain of the terminal device, information that is determined by the first node and that is for selecting the terminating access domain of the terminal device. When a terminating access domain of a terminal device is selected, a status of a session established by the terminal device, a working status of a P-CSCF, and the like that are sensed by an SMN are considered, to improve accuracy of terminating access domain selection of the terminal device.

## Description

This application claims priority to Chinese Patent Application No. 202010377405.2, filed with the China National Intellectual Property Administration on May 7, 2020 and entitled "TERMINATING ACCESS DOMAIN SELECTION METHOD AND APPARATUS", which is incorporated herein by reference in its entirety.

### TECHNICAL FIELD

This application relates to the communications field, and more specifically, to a terminating access domain selection method and an apparatus.

### BACKGROUND

An internet protocol (internet protocol, IP) multimedia system, namely, an IP multimedia subsystem (IP Multimedia Subsystem, IMS), is defined by 3GPP specifications and standards. The internet protocol multimedia system can provide various multimedia services such as audio, video, text, and data for a user based on a packet switched (packet switched, PS) network. It can be understood that services carried on a circuit switched (circuit switched, CS) network, such as voice call, video call, and short message, are implemented based on the PS network. The foregoing services provided based on the PS network may be called IMS UoPS services. When having a mobile terminated service for a terminal device, a telephony application server (telephony application server, TAS) sends a terminating access domain selection request message to a subscriber data management network node (subscriber data management node, SDMN). The SDMN generates a terminating access domain selection response message based on information related to terminating access domain selection provided by a mobility management node (mobility management node, MMN) with which the terminal device has registered, and feeds back the terminating access domain selection response message to the TAS. Due to some defects in an existing mechanism, the terminating access domain selection response message provided by the SDMN for the TAS may be inaccurate. Consequently, the terminal device cannot normally perform an IMS UoPS service. For example, the MMN cannot detect whether a session is normal and whether a session-related node runs normally. As a result, terminating access domain selection determining is inaccurate.

### SUMMARY

This application provides a terminating access domain selection method and an apparatus, to improve accuracy of terminating access domain selection of a terminal device.

According to a first aspect, a terminating access domain selection method is provided. The method may be performed by a first node or a module (for example, a chip) disposed in (or used in) the first node. The following uses an example in which the method is performed by the first node for description.

The method includes: The first node obtains N pieces of first information, where the N pieces of first information correspond to N session management network nodes SMNs, the first information is information that is determined by a corresponding SMN and that is for selecting a terminating access domain of a terminal device, and N is an integer greater than 0; and the first node determines second information based on the N pieces of first information, where the second information is information that is determined by the first node and that is for selecting the terminating access domain of the terminal device.

According to the foregoing solution, when a terminating access domain of a terminal device is selected, information that is sensed by a session management network node SMN in a network and that is for selecting the terminating access domain of the terminal device is considered, so that accuracy of terminating access domain selection of the terminal device can be improved.

With reference to the first aspect, in some implementations of the first aspect, each of the N pieces of first information includes one or more of the following:
a first information element, indicating whether a network supports a target service of the terminal device, where the target service is an internet protocol multimedia subsystem voice over packet switched session IMS VoPS service;
a second information element, indicating a radio access technology RAT type of the terminal device; and
a third information element, indicating a last access time LAT of the terminal device.

According to the foregoing solution, when a terminating access domain of a terminal device is selected, one or more of whether the terminal device supports the IMS UoPS, a RAT type of the terminal device, and a last access time of the terminal device that are sensed by an SMN are specifically considered, so that accuracy of terminating access domain selection of the terminal device can be improved.

With reference to the first aspect, in some implementations of the first aspect, the second information element in each of the N pieces of first information indicates a first RAT type, and that the first node determines second information based on the N pieces of first information includes: The first node determines that a fourth information element indicates the first RAT type.

According to the foregoing solution, the first node groups first information indicating a same RAT type, and determines, based on the N pieces of first information, terminating access domain selection information of a terminal device corresponding to the RAT type, so that accuracy of terminating access domain selection of the terminal device can be improved.

With reference to the first aspect, in some implementations of the first aspect, that the first node determines second information based on the N pieces of first information includes: When a local policy of the first node indicates not to consider third information, the first node determines the second information based on the N pieces of first information, where the third information is information that is determined by a mobility management network node MMN and that is for selecting the terminating access domain of the terminal device.

With reference to the first aspect, in some implementations of the first aspect, that the first node determines second information based on the N pieces of first information includes: The first node determines, based on the third information element in the N pieces of first information, that a fifth information element in the second information indicates a first LAT, where the first LAT is a latest LAT in one or more LATs indicated by the third information element in the N pieces of first information.

With reference to the first aspect, in some implementations of the first aspect, that the first node determines second information based on the N pieces of first information includes: When a local policy of the first node indicates to consider third information, and a seventh information element in the third information indicates that the network supports the target service of the terminal device, the first node determines the second information based on the N pieces of first information and the third information, where the third information is information that is determined by a mobility management network node MMN and that is for selecting the terminating access domain of the terminal device.

With reference to the first aspect, in some implementations of the first aspect, that the first node determines second information based on the N pieces of first information includes: When the N pieces of first information include the at least one first information element indicating that the network supports the target service of the terminal device, the first node determines that a sixth information element in the second information indicates that the network supports the target service of the terminal device; or when the N pieces of first information do not include the third information element indicating that the network supports the target service of the terminal device, the first node determines that a sixth information element in the second information indicates that the network does not support the target service of the terminal device.

According to the foregoing solution, the first node determines, depending on whether the N pieces of first information include the first information element indicating that the network supports the target service of the terminal device, whether the network supports the target service of the terminal device, so that accuracy of terminating access domain selection of the terminal device can be improved.

With reference to the first aspect, in some implementations of the first aspect, that the first node determines second information based on the N pieces of first information includes: When a local policy of the first node indicates to consider third information, and a seventh information element in the third information indicates that the network does not support the target service of the terminal device, the first node determines the second information based on the N pieces of first information and the third information, where the third information is information provided by a mobility management network node MMN for selecting the terminating access domain of the terminal device.

With reference to the first aspect, in some implementations of the first aspect, that the first node determines the second information based on the N pieces of first information and the third information includes: The seventh information element in the third information indicates that the network does not support the target service of the terminal device, and a sixth information element in the second information indicates that the network does not support the target service of the terminal device.

With reference to the first aspect, in some implementations of the first aspect, that the first node determines the second information based on the N pieces of first information and the third information includes: The first node determines, based on the third information element in the N pieces of first information and an eighth information element in the third information, that the fourth information element in the second information indicates a second LAT, where the eighth information element indicates the LAT of the terminal device determined by an MMN device, and the second LAT is a latest LAT in one or more LATs that are indicated by the third information element in the N pieces of first information and the eighth information element in the third information.

With reference to the first aspect, in some implementations of the first aspect, the first node is an MMN, and that a first node obtains N pieces of first information includes: The MMN receives the first information sent by each of the N SMNs.

With reference to the first aspect, in some implementations of the first aspect, the first node is a first SMN in the N SMNs, and that a first node obtains N pieces of first information includes: The first SMN determines the first information corresponding to the first SMN. The first SMN receives the first information sent by each of the N SMNs except the first SMN.

With reference to the first aspect, in some implementations of the first aspect, the method further includes: The first node sends the second information to an SDMN.

With reference to the first aspect, in some implementations of the first aspect, the first node is an SDMN, and that a first node obtains N pieces of first information includes: The SDMN receives the first information sent by each of the N SMNs.

According to a second aspect, a terminating access domain selection method is provided. The method may be performed by a subscriber data management network node SDMN or a module (for example, a chip) disposed in (or used in) the SDMN. The following uses an example in which the method is performed by the SDMN for description.

The method includes: The subscriber data management network node SDMN groups one or more pieces of second information into at least one information group, where second information included in one information group indicates a same RAT type, the one or more pieces of second information correspond to one or more first nodes, and the second information is information that is determined by a corresponding first node and that is for selecting a terminating access domain of a terminal device; and the SDMN sends a response message to a telephony application service TAS node, where the response message is determined by the SDMN based on target second information in a target information group, the target information group is an information group whose last access time LAT of the terminal device is the latest in the at least one information group, and the target second information is second information whose LAT of the terminal device is the latest and that is indicated in the target information group.

With reference to the second aspect, in some implementations of the second aspect, the response message includes one or more of the following:
a tenth information element, indicating a RAT type, where the RAT type indicated by the tenth information element is the same as the RAT type indicated by the target second information;
an eleventh information element, indicating a LAT, where the LAT indicated by the eleventh information element is the same as the LAT indicated by the target second information; and
a twelfth information element, indicating whether a network supports a target service of the terminal device, where content indicated by the third information element is the same as content that is indicated by the target second information and that indicates whether the network supports the target service of the terminal device.

With reference to the second aspect, in some implementations of the second aspect, the target information group includes at least one piece of second information indicating that the target service of the terminal device is supported, and the target second information is one of the at least one piece of second information indicating that the target service of the terminal device is supported and indicates a latest LAT of the terminal device. Alternatively, when the target information group does not include second information indicating that the target service of the terminal device is supported, the target second information is one piece of second information in the target information group and indicates a latest LAT.

With reference to the second aspect, in some implementations of the second aspect, a LAT of each of the at least one information group is a latest LAT in one or more LATs indicated by the second information included in each information group.

According to a third aspect, a terminating access domain selection method is provided. The method may be performed by a session management network node SMN or a module (for example, a chip) disposed in (or used in) the SMN. The following uses an example in which the method is performed by the SMN for description.

The method includes: The session management network node SMN receives a session establishment request of a terminal device; and the SMN determines first information based on session-related information of the terminal device, where the first information is information that is determined by the SMN and that is for selecting a terminating access domain of the terminal device.

With reference to the third aspect, in some implementations of the third aspect, the session-related information includes a radio access technology RAT type of the terminal device and/or a last access time LAT of the terminal device, and the first information includes an information element indicating the RAT type and/or an information element indicating the LAT.

With reference to the third aspect, in some implementations of the third aspect, the first information includes an information element indicating whether a target service of the terminal device is supported, and the method further includes: When a first decision condition is met, the SMN determines that the information element indicating whether the target service of the terminal device is supported indicates to support the target service of the terminal device; or when the first decision condition is not met, the SMN determines that the information element indicating whether the target service of the terminal device is supported indicates not to support the target service of the terminal device.

With reference to the third aspect, in some implementations of the third aspect, the first decision condition includes one or more of the following.

A session of the terminal device is in an active state.

The SMN supports the target service.

The session of the terminal device is a session that may be used for the target service.

A working status of a proxy-call session control function P-CSCF is normal.

With reference to the third aspect, in some implementations of the third aspect, when each item included in the first decision condition is met, the first condition is met; or when at least one of items of the first decision condition is not met, the first condition is not met.

According to a fourth aspect, a communication apparatus is provided. The communication apparatus includes each module or unit configured to perform the method according to any one of the first aspect and the possible implementations of the first aspect.

According to a fifth aspect, a communication apparatus is provided and includes a processor. The processor is coupled to a memory, and may be configured to execute instructions in the memory, to implement the method according to any one of the possible implementations of the first aspect. Optionally, the communication apparatus further includes the memory. Optionally, the communication apparatus further includes a communication interface, and the processor is coupled to the communication interface.

In an implementation, the communication apparatus is a first node. When the communication apparatus is the first node, the communication interface may be a transceiver or an input/output interface.

In another implementation, the communication apparatus is a chip disposed in the first node. When the communication apparatus is the chip disposed in the first node, the communication interface may be an input/output interface.

Optionally, the transceiver may be a transceiver circuit. Optionally, the input/output interface may be an input/output circuit.

According to a sixth aspect, a communication apparatus is provided and includes a processor. The processor is coupled to a memory, and may be configured to execute instructions in the memory, to implement the method according to any one of the second aspect and the possible implementations of the second aspect. Optionally, the communication apparatus further includes the memory. Optionally, the communication apparatus further includes a communication interface, and the processor is coupled to the communication interface.

In an implementation, the communication apparatus is an SDMN. When the communication apparatus is the SDMN, the communication interface may be a transceiver or an input/output interface.

In another implementation, the communication apparatus is a chip disposed in the SDMN. When the communication apparatus is the chip disposed in the SDMN, the communication interface may be an input/output interface.

Optionally, the transceiver may be a transceiver circuit. Optionally, the input/output interface may be an input/output circuit.

According to a seventh aspect, a communication apparatus is provided and includes a processor. The processor is coupled to a memory, and may be configured to execute instructions in the memory, to implement the method according to any one of the third aspect and the possible implementations of the third aspect. Optionally, the communication apparatus further includes the memory. Optionally, the communication apparatus further includes a communication interface, and the processor is coupled to the communication interface.

In an implementation, the communication apparatus is an SMN. When the communication apparatus is the SMN, the communication interface may be a transceiver or an input/output interface.

In another implementation, the communication apparatus is a chip disposed in the SMN. When the communication apparatus is the chip disposed in the SMN, the communication interface may be an input/output interface.

Optionally, the transceiver may be a transceiver circuit. Optionally, the input/output interface may be an input/output circuit.

According to an eighth aspect, a processor is provided and includes an input circuit, an output circuit, and a processing circuit. The processing circuit is configured to: receive a signal through the input circuit, and transmit a signal through the output circuit, so that the processor performs the method according to any one of the first aspect to the third aspect and the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a ninth aspect, a processing apparatus is provided and includes a processor and a memory. The processor is configured to read instructions stored in the memory, and may receive a signal by using a receiver, and transmit a signal by using a transmitter, to perform the method according to any one of the first aspect to the third aspect and the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process, for example, sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the ninth aspect may be one or more chips. The processor in the processing apparatus may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a tenth aspect, a computer program product is provided. The computer program product includes a computer program (also referred to as code or instructions). When the computer program is run, a computer is enabled to perform the method according to any one of the first aspect to the third aspect and the possible implementations of the first aspect to the third aspect.

According to an eleventh aspect, a computer-readable medium is provided. The computer-readable medium stores a computer program (also referred to as code or instructions). When the computer program is run on a computer, the computer is enabled to perform the method according to any one of the first aspect to the third aspect and the possible implementations of the first aspect to the third aspect.

According to a twelfth aspect, a communication system is provided and includes the foregoing at least one SDMN and at least one SMN. The system may further include the foregoing at least one first node.

### BRIEF DESCRIPTION OF DRAWINGS

FIG. 1 is a schematic diagram of an architecture of a packet switched network according to an embodiment of this application;
FIG. 2 is a schematic flowchart of determining a first information element according to an embodiment of this application;
FIG. 3 is a schematic flowchart of a first decision function of a first node according to an embodiment of this application;
FIG. 4 is another schematic flowchart of a first decision function of a first node according to an embodiment of this application;
FIG. 5 is a schematic flowchart of terminating access domain selection of a terminal device according to an embodiment of this application;
FIG. 6 is a schematic flowchart of performing, by a first node, terminating access domain selection information initial decision according to an embodiment of this application;
FIG. 7 is a schematic flowchart of performing, by an SDMN, terminating access domain selection response message re-decision according to an embodiment of this application;
FIG. 8 is a schematic flowchart of a registration procedure of a terminal device according to an embodiment of this application;
FIG. 9 is a schematic flowchart in which an MMN is used as a first node according to an embodiment of this application;
FIG. 10 is a schematic flowchart in which an SMN is used as a first node according to an embodiment of this application;
FIG. 11 is a schematic flowchart in which an SDMN is used as a first node according to an embodiment of this application;
FIG. 12 is a schematic block diagram of a communication apparatus applicable to an embodiment of this application; and
FIG. 13 is a schematic diagram of a structure of a communication device applicable to this application.

### DESCRIPTION OF EMBODIMENTS

The following describes technical solutions of this application with reference to accompanying drawings.

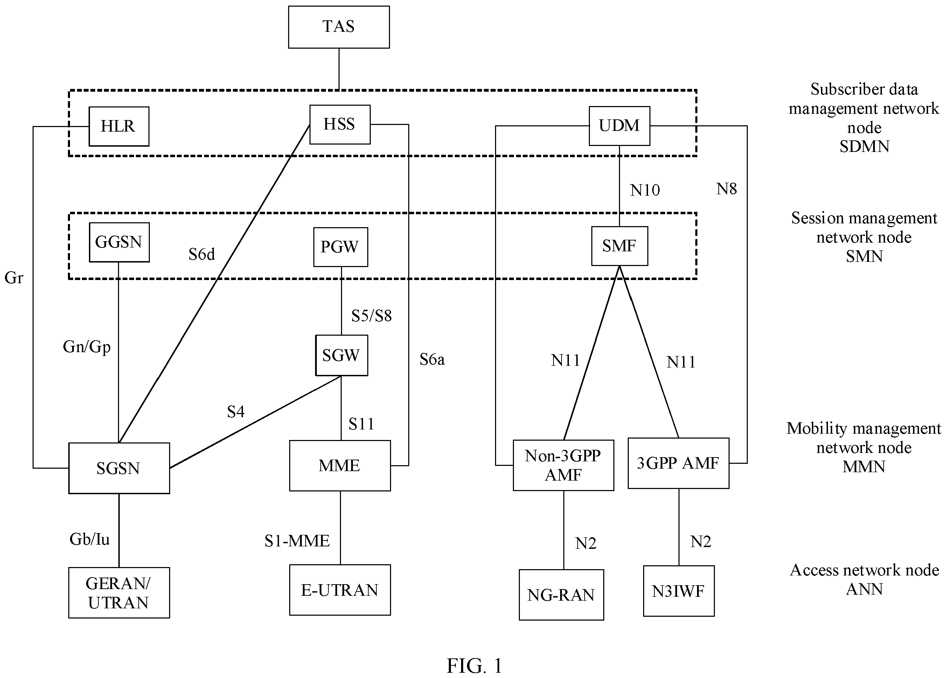

FIG. 1 is a schematic diagram of an architecture of a packet switched network according to this application. Network nodes and functions in FIG. 1 are described in Table 1.

**Table 1**

| Network element type | 5G network node | 4G network node | 2G/3G network node | Network element function |
|---|---|---|---|---|
| Subscriber data management network node (subscriber data management node, SDMN)⁽¹⁾ | Unified data management (unified data management, UDM) | Home subscriber server (home subscriber server, HSS) | Home location register (home location register, HLR) | Manage subscription data of a terminal device and dynamic subscriber data that needs to be coordinated among a plurality of networks |
| Session management network node (session management node, SMN)⁽²⁾ | Session management function (Session Management Function, SMF) | Packet data network gateway (packet data network gateway, PGW)⁽³⁾ | Gateway general packet radio service (general packet radio service, GPRS) support node (gateway GPRS support node, GGSN) | Manage a session of a terminal device, and provide a data service for UE through the session |
| Mobility management network node (mobility management node, MMN) | 3GPP access and mobility management function (access and mobility management function, AMF) and Non-3 GPP AMF | Mobility management entity (mobility management entity, MME) | Serving GPRS support node (serving GPRS support node, SGSN)⁽⁴⁾ | Process various service procedures generated due to location movement of a terminal device, and select an appropriate session management network element for UE to establish a related session |
| Access network node (access network node, ANN) | Next generation radio access network (next generation radio access network, NG-RAN) | Evolved universal terrestrial radio access network (evolved universal terrestrial radio access network, E-UTRAN) | Global system for mobile communications (global system for mobile communications, GSM)/enhanced data rates for GSM evolution (enhanced data rates for GSM evolution, EDGE) radio access network GERAN (2G) Universal terrestrial radio access network (universal terrestrial radio access network, UTRAN) (3G) | Responsible for access of a terminal device via a 3GPP access network, and mainly complete radio resource management of the terminal device and routing and forwarding of air interface signaling and data |
| | Non-3 GPP interworking function (non-3GPP interworking function, N3IWF) | - | - | Responsible for access of a terminal device via a non-3GPP access network, and mainly complete radio resource management of the terminal device and routing and forwarding of air interface signaling and data |
| Note: | | | | |
| (1) In common networking, the HLR, the HSS, and the UDM are deployed on a same physical network device to share dynamic subscriber data of UE on different networks. | | | | |
| (2) In common networking, the GGSN, the PGW, and the SMF are deployed on a same physical network device to ensure session continuity when UE migrates between different networks. | | | | |
| (3) In a 4G network, a mobility management network element MME is connected to a session management network element PGW via an SGW. | | | | |
| (4) The SGSN (serving GPRS support node) may provide a data service for UE via a 4G network node. The SGSN is connected to an SGW in a 4G network through an S4 interface, and is connected to the HSS in the 4G network through an S6d interface. | | | | |

In embodiments of this application, a terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

The wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

It should be understood that a specific form of the terminal device is not limited in this application.

To facilitate understanding of embodiments of this application, terms used in this application are first briefly described.

### 1. Multi-connection

A terminal device may access different types of ANNs (for example, an NG-RAN in 5G, an E-UTRAN in 4G, or a UTRAN in 2G/3G) by using different radio access technologies (radio access technologies, RATs), and different types of ANNs may be connected to different types of MMNs. The terminal device is on an MMN and establishes a session, and the established session carries service data transmission of an application layer. Terminal devices may be classified into the following two types depending on whether different RATs can be simultaneously used to establish connections to a network.

Single-connection terminal device: A terminal device can connect to a network and perform service data transmission by using only one RAT at a same moment.

Multi-connection terminal device: A terminal device can connect to a network and perform service data transmission by using a plurality of RATs at a same moment.

### 2. Multi-registration

A terminal device may simultaneously register with one or more types of MMNs (for example, an AMF in 5G, an MME in 4G, or an SGSN in 2G/3G), so that an SDMN simultaneously records registration information of a plurality of different types of MMNs. Both a single-connection terminal device and a multi-connection terminal device may perform multi-registration on the SDMN.

For example, the single-connection terminal device can perform service communication only over a 2G/3G network or a 4G network, but the SDMN records dual registration information of both an SGSN and an MME of the terminal device.

For another example, the multi-connection UE accesses a network via an MME, a 3GPP AMF, and a non-3GPP AMF at the same time, and the SDMN records three pieces of registration information of the MME, the 3GPP AMF, and the non-3GPP AMF at the same time.

The following describes in detail a sidelink communication method provided in embodiments of this application with reference to the accompanying drawings.

This application proposes: When a terminal device establishes a session with one or more SMNs via an MMN, the SMN determines whether the session established by the terminal device is an IMS session, whether an IMS UoPS service of the terminal device can be normally performed, and the like, to determine first information, where the first information is information determined by the SMN and used for terminating access domain selection of the terminal device. The first information includes one or more of the following information elements:
a first information element, indicating whether a network supports the IMS UoPS service of the terminal device;
a second information element, indicating a radio access technology RAT type of the terminal device; and
a third information element, indicating a last access time (last access time, LAT) of the terminal device.

The SMN may determine, based on the RAT type of the terminal device, the RAT type indicated by the second information element, and the SMN may determine the third information element based on the LAT of the terminal device.

Optionally, the SMN may determine the first information element based on a first decision condition set, where the first decision condition set includes one or more of the following conditions.

### Condition 1: A session of the terminal device is in an active state.

For example, the SMN may sense, via a service procedure, that the session is in an active state because of a successful session establishment procedure, or in an inactive state because of a session deletion procedure. However, this application is not limited thereto.

### Condition 2: The SMN supports the IMS VoPS service.

For example, the SMN may determine, based on a local configuration of the SMN, whether the SMN supports the IMS VoPS service.

### Condition 3: The terminal device identifies that the session can be used for the IMS VoPS service.

For example, the terminal device includes identification information in a session establishment or update request message. For example, the session establishment or update request message includes a protocol configuration option (protocol configuration option, PCO) information element. The PCO information element carries first identification information (for example, an IM CN Subsystem Signaling Flag) for identifying the session. The SMN determines, based on the first identification information, whether the session can be used for the IMS VoPS service. However, this application is not limited thereto.

### Condition 4: A proxy-call session control function (proxy-call session control function, P-CSCF) is normal.

For example, a user plane function (user plane function, UPF) network element may report, to the SMN, whether the P-CSCF is normal.

By way of example, and not limitation, the first decision condition set may be set by a local policy of the SMN.

Optionally, the first information element may be referred to as an SMN-determined IMS VoPS session flag (IMS VoPS sessions flag-SMN, IMS-F-S). However, this application is not limited thereto.

The first information element may indicate one or more of the following cases: The network supports the IMS VoPS service of the terminal device; the network does not support the IMS VoPS service of the terminal device; or it is not determined whether the network supports the IMS VoPS service of the terminal device.

Optionally, all conditions in the first decision condition set are met, and the first information element indicates that the network supports the IMS VoPS service of the terminal device. For example, the first information element may indicate supporting (Support or S). Alternatively, the first information element may be a bit or a bit string, and a predefined value indicates that a network device supports the IMS VoPS service of the terminal device. For example, when the first information element indicates "11", it indicates that the network supports the IMS VoPS service of the terminal device. However, this application is not limited thereto.

Optionally, at least one condition in the first decision condition set is not met, and the first information element indicates that the network does not support the IMS VoPS service of the terminal device. For example, the first information element may indicate not supporting (not support or NS). Alternatively, the first information element may be a bit or a bit string, and a predefined value indicates that a network device supports the IMS VoPS service of the terminal device. For example, when the first information element indicates "01", it indicates that the network supports the IMS VoPS service of the terminal device. However, this application is not limited thereto.

Optionally, it is not determined whether at least one condition in the first decision condition set is met, and the first information element indicates that it is not determined whether the network supports the IMS UoPS service of the terminal device. For example, the first information element may indicate unknown (unknown or UN). Alternatively, the first information element may be a bit or a bit string, and a predefined value indicates that a network device supports the IMS UoPS service of the terminal device. For example, when the first information element indicates "00", it indicates that the network supports the IMS UoPS service of the terminal device. However, this application is not limited thereto.

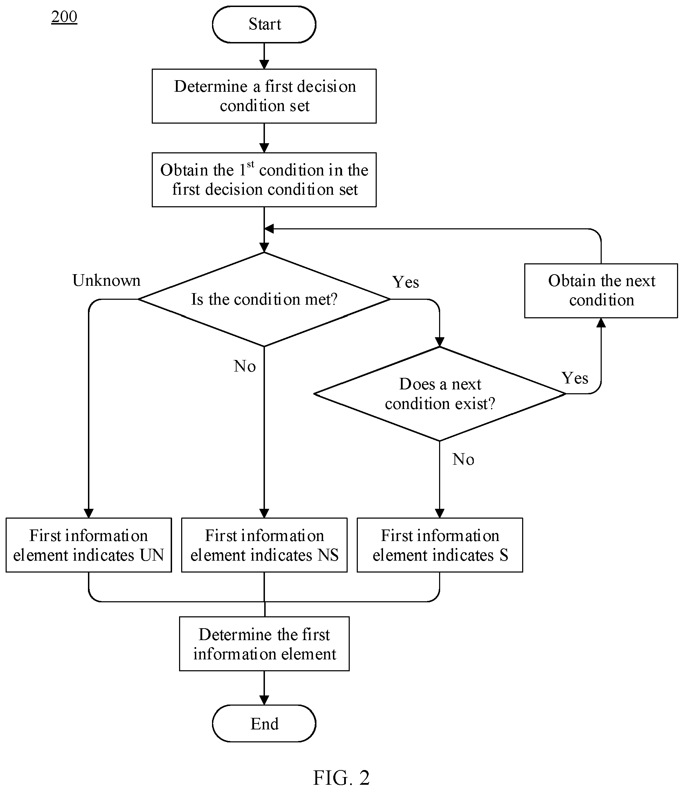

Optionally, decision logic for the SMN to determine the first information element may be shown in FIG. 2. The SMN determines the first decision condition set, and obtains the 1^{st} condition in the set. If it is not determined whether the condition is met, the first information element indicates UN. If the condition is not met, the first information element indicates NS. If the condition is met, it is determined whether a next condition exists. If the next condition exists, the next condition is obtained and it is determined whether the condition is met. If the next condition does not exist, the first information element indicates S. Content indicated by the first information element is determined based on the foregoing logic. However, this application is not limited thereto.

In this application, the network includes at least one first node having a first decision function. The first decision function is specifically: determining second information based on obtained information that is determined by the SMN and/or the MMN and that is for selecting a terminating access domain of the terminal device, where the second information is information that is determined by the first node and that is for selecting the terminating access domain of the terminal device. The SDMN generates a terminating access domain selection response message based on the information that is determined by the first node and that is for selecting the terminating access domain of the terminal device, and feeds back the response message to a TAS. By way of example, and not limitation, the first decision function may be referred to as an IMS decision function (IMS decision function, IDF).

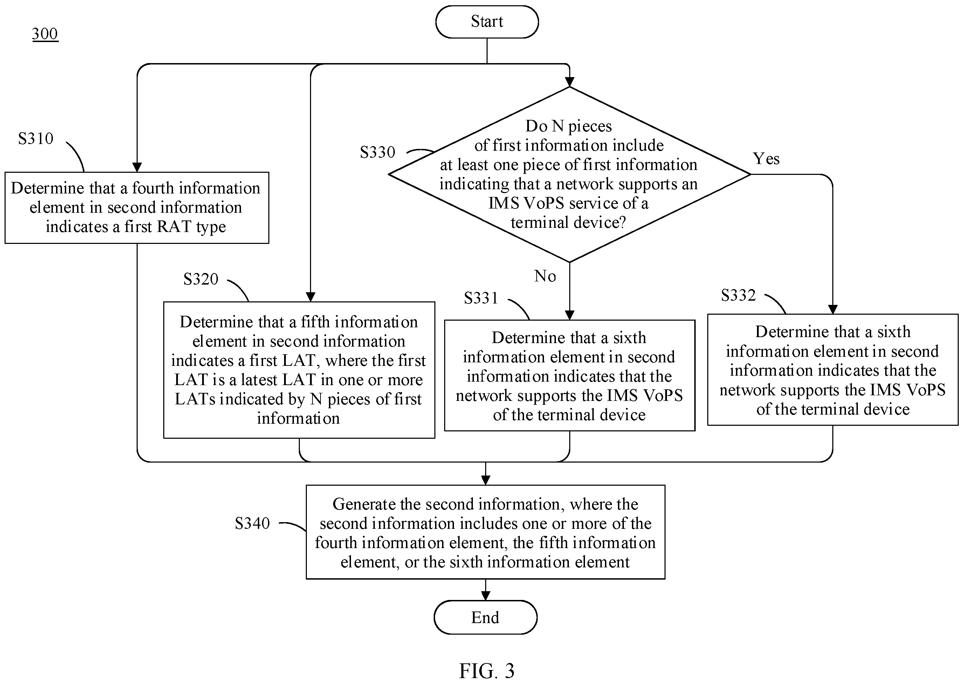

FIG. 3 is a schematic flowchart of a first decision function of a first node according to an embodiment of this application.

The first node has the first decision function. The first decision function is for determining second information. The second information is information that is determined by the first node (or determined by the first decision function) and that is for selecting a terminating access domain of a terminal device. The second information may be referred to as terminating access domain selection information (terminating access domain selection information, T-ADS-I) of the terminal device. The second information includes one or more of the following information elements:
a fourth information element, indicating a RAT type of the terminal device;
a fifth information element, indicating a last access time LAT of the terminal device; and
a sixth information element, indicating whether a network supports an IMS UoPS service of the terminal device.

The first node obtains N pieces of first information, where the N pieces of first information correspond to N SMNs, each of the N pieces of first information is information that is determined by an SMN corresponding to the first information and that is for selecting the terminating access domain of the terminal device, and the first information may be written as T-ADS-I-S. All first information elements in the N pieces of first information indicate a first RAT type.

Optionally, in S310, the first node determines that the fourth information element in the second information indicates the first RAT type.

The RAT type indicated by the fourth information element in the second information is the same as a first RAT type indicated in the N pieces of first information. For example, if the N pieces of first information are determined by N SMFs in a 5G network, the first RAT type is NR. For another example, if the N pieces of first information are determined by N PGWs in a 5G network, the first RAT type is LTE. However, this application is not limited thereto.

By way of example, and not limitation, the fourth information element may be written as IMS-F-T (IMS Voice Over PS Sessions Flag of T-ADS Information).

Optionally, in S320, the first node determines that the fifth information element in the second information indicates a first LAT.

A third information element in each piece of first information indicates a LAT of the terminal device determined by a corresponding SMN, and a latest LAT in one or more LATs indicated in the N pieces of first information is the first LAT. The first node determines that the fifth information element in the second information indicates the first LAT. In other words, the fifth information element in the second information indicates a latest LAT in the one or more LATs indicated by the N pieces of first information.

S330: The first node determines whether the N pieces of first information include at least one piece of first information indicating that the network supports the IMS VoPS service of the terminal device.

In an implementation, the N pieces of first information do not include first information indicating that the network supports the IMS VoPS service of the terminal device.

In other words, no first information element in the N pieces of first information indicates that a network device supports the IMS UoPS service of the terminal device. For example, all first information elements in the N pieces of first information indicate that the network does not support the IMS UoPS service of the terminal device. Alternatively, all first information elements in the N pieces of first information indicate that it is not determined whether the network supports the IMS VoPS service of the terminal device. Alternatively, a first information element in a part of the N pieces of first information indicates that it is not determined whether the network supports the IMS UoPS service of the terminal device, and a first information element in the other part of the N pieces of first information indicates that the network does not support the IMS VoPS service of the terminal device.

The first node performs S331 to determine that the sixth information element in the second information indicates that the network device supports the IMS VoPS service of the terminal device.

In another implementation, the N pieces of first information include at least one piece of first information indicating that the network supports the IMS UoPS service of the terminal device.

In other words, the N pieces of first information include one piece of first information, and a first information element in the one piece of first information indicates that the network supports the IMS VoPS service of the terminal device.

The first node performs S332 to determine that the sixth information element in the second information indicates that the network supports the IMS UoPS service of the terminal device.

S340: The first node generates the second information, where the second information includes one or more of the fourth information element, the fifth information element, or the sixth information element.

The first node generates the second information based on indication content of each information element in the second information element determined in the foregoing step.

According to the foregoing solution, the first node determines, based on the first information determined by each of the N SMNs, the terminating access domain selection information of the terminal device determined by the first node. When a terminating access domain of a terminal device is selected, a status of a session established by the terminal device, a working status of a P-CSCF, and the like that are sensed by an SMN are considered, to improve accuracy of terminating access domain selection of the terminal device.

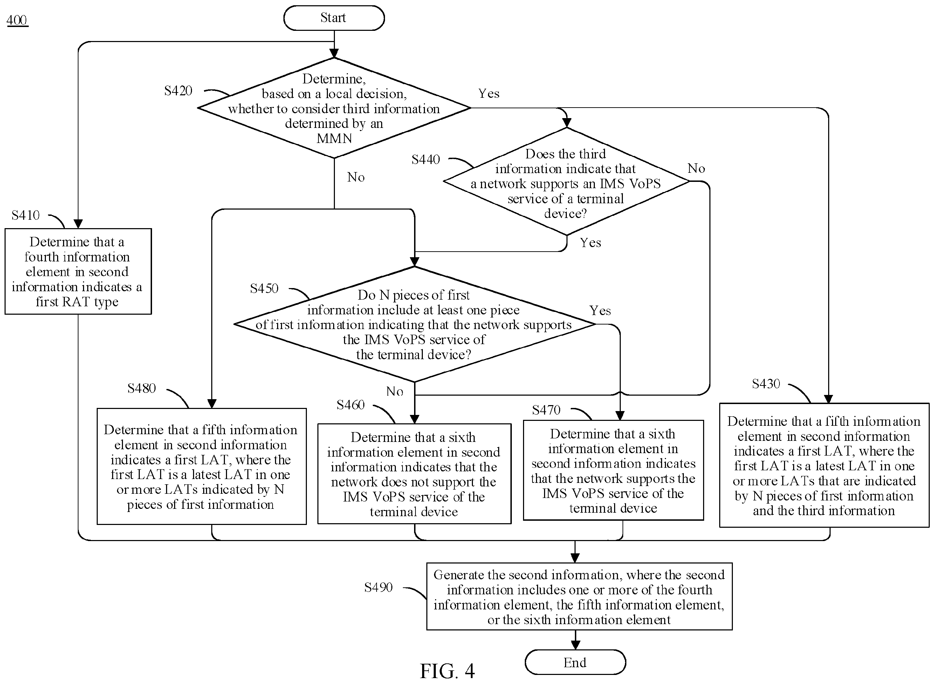

FIG. 4 is another schematic flowchart of a first decision function of a first node according to an embodiment of this application.

The first node obtains N pieces of first information, where a RAT type of a terminal device indicated by all first information elements in the N pieces of first information is a first RAT type.

S410: The first node determines that a fourth information element in second information indicates the first RAT type.

S420: The first node determines, based on a local decision configuration, whether to consider third information determined by an MMN when determining the second information.

The MMN and N SMNs are in a same network. In other words, the MMN is an MMN that establishes a connection to the N SMNs corresponding to the N pieces of first information. For example, the N SMNs are a PGW in a 4G network, and the MMN is an MME that establishes a connection to the PGW via an SGW. For another example, the N SMNs are an SMF in a 5G network, and the MMN is an AMF or a non-3GPP AMF that establishes an interface with the SMF.

The third information is information that is determined by the MMN and that is for terminating access domain selection of the terminal device. The third information includes one or more of the following:
a seventh information element, indicating that a network supports an IMS VoPS service of the terminal device;
an eighth information element, indicating a LAT of the terminal device; and
a ninth information element, indicating the RAT type of the terminal device.

The ninth information element indicates the first RAT type.

It should be noted that the first information element in the first information, a sixth information element in the second information, and the seventh information element in the third information have a same function, but entities for determining the information elements are different. For example, the first information element is determined by the SMN, the sixth information element is determined by the first node, and the seventh information element is determined by the MMN. Similarly, differences between a second information element, the fourth information element, and the ninth information element, and between a third information element, a fifth information element, and the eighth information element are that the information elements are determined by different entities.

In an implementation, the local decision configuration indicates that the third information determined by the MMN needs to be considered when the first node determines the second information. The first node performs S440 to determine whether the third information indicates that the network supports the IMS VoPS service of the terminal device.

The first node determines, based on the seventh information element in the third information, whether a network determined by the MMN supports the IMS VoPS service of the terminal device.

Optionally, the seventh information element indicates that the network does not support the IMS VoPS service of the terminal device.

The first node performs S460 to determine that the sixth information element in the second information indicates that the network does not support the IMS VoPS service of the terminal device.

Optionally, the seventh information element indicates that the network supports the IMS UoPS service of the terminal device.

The first node performs S450 to determine whether the N pieces of first information include at least one piece of first information indicating that the IMS UoPS service of the terminal device is supported.

Optionally, a determining result in S450 is "yes", to be specific, there is at least one piece of first information in the N pieces of first information, and a first information element in the at least one piece of first information indicates that the network supports the IMS VoPS service of the terminal device.

The first node performs S470 to determine that the sixth information element in the second information indicates that the network supports the IMS UoPS service of the terminal device.

Optionally, a determining result of S450 is "no", to be specific, the N pieces of first information do not include first information indicating that the network supports the IMS UoPS service of the terminal device.

The first node performs S460 to determine that the sixth information element in the second information indicates that the network does not support the IMS VoPS service of the terminal device.

S490: The first node generates the second information, where the second information includes one or more of the fourth information element, the fifth information element, or the sixth information element.

The first node determines indication content of each information element in the second information based on the foregoing step, and generates the second information. In other words, the first node determines, based on the N pieces of first information and the third information, a result of determining, by the first node, whether the network supports the IMS VoPS service of the terminal device.

In another implementation, in S420, the first node determines that the local decision configuration indicates that the third information determined by the MMN is not considered when the first node determines the second information.

Optionally, the first node performs S480 to determine that the fifth information element in the second information indicates a first LAT, where the first LAT is a latest LAT in one or more LATs indicated by the N pieces of first information.

The first node performs S450 to determine whether the N pieces of first information include at least one piece of first information indicating that the IMS UoPS service of the terminal device is supported.

The first node performs a corresponding step based on a result of the determining in S450. S450 is the same as S330 in FIG. 3. For subsequent steps and logic of S450, refer to the descriptions in FIG. 3. For brevity, details are not described herein again.

It should be understood that sequence numbers of the processes do not mean execution sequences in the foregoing embodiments. The execution sequences of the processes should be determined based on functions and internal logic of the processes, and should not be construed as any limitation on the implementation processes of embodiments of this application. Therefore, in specific implementation, some or all of the steps may be selected for implementation. This is not limited in this application.

According to the foregoing solution, the first node may further determine, based on the local decision configuration, whether to consider terminating access domain selection information of the terminal device determined by the MMN, that is, the second information, to determine, based on the first information determined by each of the N SMNs, or based on the N pieces of first information and the second information, terminating access domain selection information of the terminal device determined by the first node. When a terminating access domain of a terminal device is selected, a status of a session established by the terminal device, a working status of a P-CSCF, and the like that are sensed by an SMN are considered, to improve accuracy of terminating access domain selection of the terminal device.

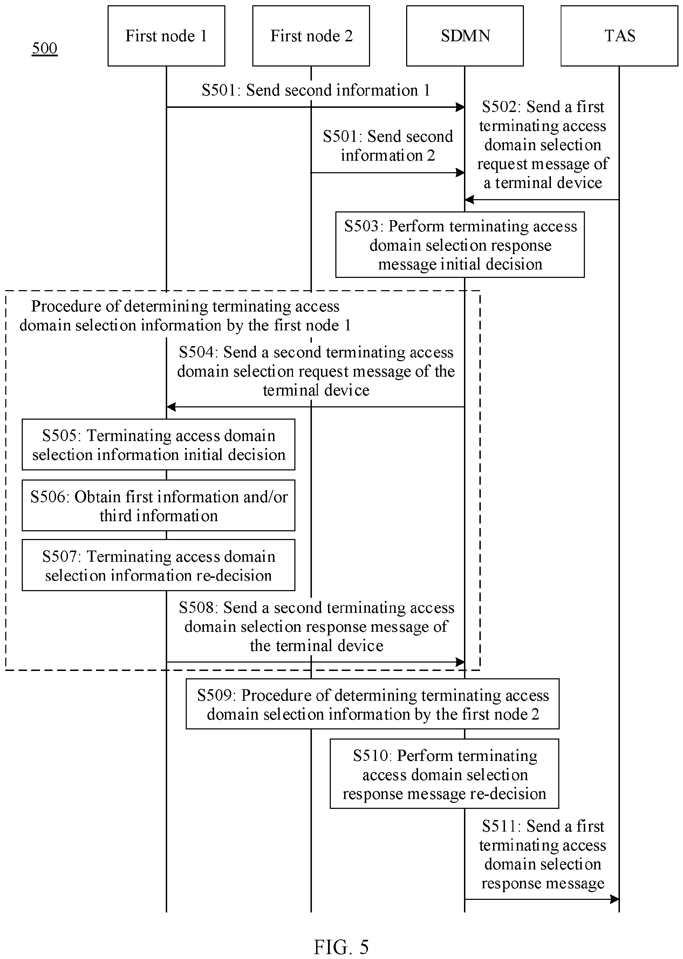

FIG. 5 is a schematic flowchart of terminating access domain selection of a terminal device according to an embodiment of this application.

It should be understood that FIG. 5 is described by using an example in which a PS network includes two first nodes (that is, a first node 1 and a first node 2). However, this application is not limited thereto, and the PS network may include one or more first nodes. Each first node may correspond to one of a 2G, 3G, 4G, or 5G network.

S501: The first node 1 and/or the first node 2 separately send/sends second information to an SDMN.

The first node 1 and/or the first node 2 may determine the second information in the foregoing implementation in which the first node performs the first decision function. For example, the first node 1 determines second information 1, and the first node 2 determines second information 2.

Correspondingly, the SDMN receives the second information sent by each of the first node 1 and/or the first node 2.

S502: A TAS sends a first terminating access domain selection request message of the terminal device to the SDMN.

When the terminal device has an IMS UoPS mobile terminated service, the TAS sends the first terminating access domain selection request message to the SDMN. Correspondingly, the SDMN receives the first terminating access domain selection request message of the terminal device sent by the TAS. The first terminating access domain selection request message is for requesting terminating access domain selection information of the terminal device.

S503: The SDMN performs terminating access domain selection information initial decision.

After receiving the first terminating access domain selection request message, the SDMN performs initial decision on the terminating access domain selection information based on the second information obtained from the one or more first nodes. For example, in this embodiment, the SDMN performs initial decision based on the received second information 1 and second information 2. Optionally, initial decision logic of the SDMN for the terminating access domain selection information may be as follows.

If sixth information elements in pieces of second information obtained by the SDMN all indicate that a network supports an IMS UoPS service of the terminal device, the SDMN determines that a tenth information element in a terminating access domain selection response message indicates that the network supports the IMS VoPS service of the terminal device. In a next step, the SDMN directly performs S510, and does not perform steps between S503 and S510.

If sixth information elements in pieces of second information obtained by the SDMN all indicate that a network does not support an IMS VoPS service of the terminal device, the SDMN determines that a tenth information element in a terminating access domain selection response message indicates that the network does not support the IMS UoPS service of the terminal device. In a next step, the SDMN directly performs S510, and does not perform steps between S503 and S510.

In another case, the tenth information element indicates that it is not determined whether the network supports the IMS VoPS service of the terminal device. In a next step, the SDMN performs S504.

The another case may be that the second information obtained by the SDMN includes both second information indicating that the IMS VoPS service of the terminal device is not supported and second information indicating that the network supports the IMS VoPS service of the terminal device. Alternatively, the second information obtained by the SDMN includes second information indicating that it is not determined whether the network supports the IMS UoPS service of the terminal device. However, this application is not limited thereto.

S504: The SDMN sends a second terminating access domain selection request message to the first node 1.

Correspondingly, the first node 1 receives the second terminating access domain selection request message sent by the SDMN.

S505: The first node 1 performs terminating access domain selection information initial decision.

After receiving the second terminating access domain selection request message, the first node 1 performs terminating access domain selection information initial decision. This determines whether third information determined by an MMN and/or first information determined by an SMN need/needs to be obtained.

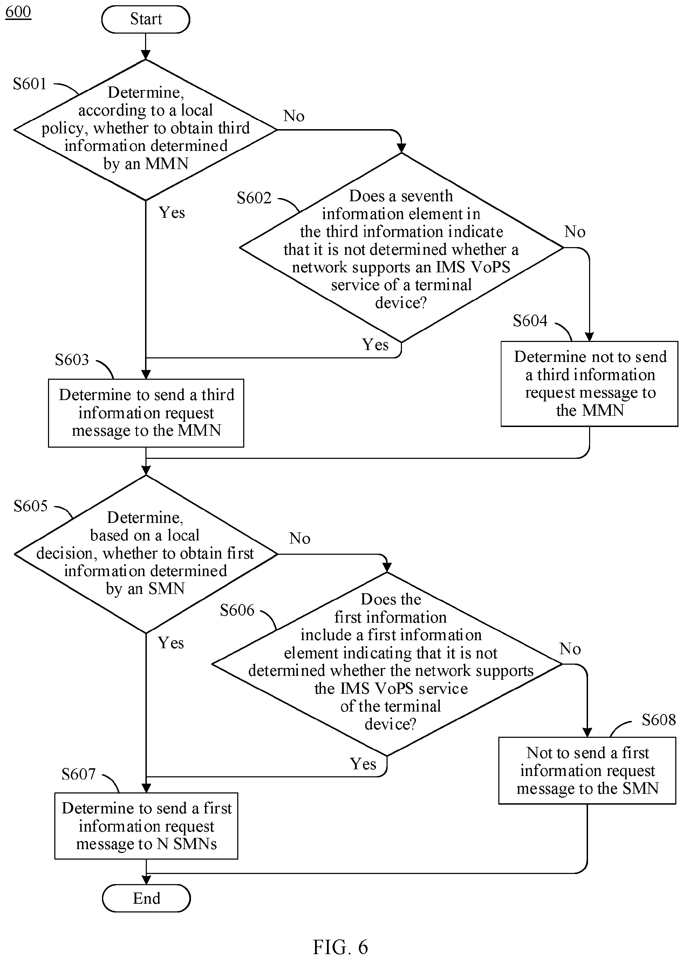

FIG. 6 is a schematic flowchart of performing, by a first node, terminating access domain selection information initial decision.

S601: The first node determines, according to a local policy, whether to obtain the third information determined by the MMN.

The first node determines, according to the local policy, whether to obtain the third information determined by the MMN.

When the local policy indicates to obtain the third information determined by the MMN, the first node performs S603 to determine to send a third information request message to the MMN. Optionally, an information element indicating whether to send the third information request message to the MMN may be set to "true". For example, the information element may be written as Send-to-MMN, and a case in which the information element is set to "true" may be Send-to-MMN="true".

When the local policy indicates not to obtain the third information determined by the MMN, the first node performs S602.

S602: The first node determines whether a seventh information element in third information (which may be the third information previously obtained from the MMN and locally stored, but this application is not limited thereto) locally stored by the first node indicates that it is not determined whether the network supports the IMS VoPS service of the terminal device.

When the seventh information element in the third information indicates unknown, the first node performs S603.

When the seventh information element in the third information does not indicate unknown, the first node performs S604 to determine not to send the third information request message to the MMN. Optionally, the information element indicating whether to send the third information request message to the MMN may be set to "false", for example, Send-to-MMN="false".

S605: The first node determines, according to the local policy, whether to obtain the first information determined by the SMN.

The first node determines, according to the local policy, whether to obtain the first information determined by the SMN.

When the local policy indicates to obtain the first information determined by the SMN, the first node performs S607 to determine to send a first information request message to N SMNs, where N is an integer greater than 0. Optionally, an information element indicating whether to send the first information request message to the SMN may be set to "true". For example, the information element may be written as Send-to-SMN, and a case in which the information element is set to "true" may be Send-to-SMN="true".

When the local policy indicates not to obtain the first information determined by the SMN, the first node performs S606.

S602: The first node determines whether first information (which may be the first information previously obtained from the SMN and locally stored, but this application is not limited thereto) locally stored by the first node includes a first information element indicating that it is not determined whether the network supports the IMS VoPS service of the terminal device.

When the first information element indicating unknown is included, the first node performs S607.

When the first information element indicating unknown is not included, the first node performs S608 to determine not to send the third information request message to the SMN. Optionally, the information element indicating whether to send the third information request message to the MMN may be set to "false", for example, Send-to-SMN="false" .

S506: The first node 1 obtains the first information and/or the third information.

The first node 1 determines, based on terminating access domain information initial decision, whether to obtain the third information determined by the MMN, and/or whether to obtain the first information determined by the SMN. When the first information and/or the third information need/needs to be obtained, the first node 1 performs S506.

For example, the first node 1 may determine, based on Send-to-SMN obtained through initial decision, whether the first information needs to be obtained. If the first information needs to be obtained, the first node 1 obtains the first information.

Optionally, that the first node 1 obtains the first information in S506 may include: The first node 1 sends the first information request message to the N SMNs, and receives response messages that are separately sent by the N SMNs for the first information request message, where the response messages include the first information.

For another example, the first node 1 may determine, based on Send-to-MMN obtained through initial decision, whether the third information needs to be obtained. If the third information needs to be obtained, the first node 1 obtains the third information.

Optionally, that the first node 1 obtains the third information in S506 may include: The first node 1 sends the third information request message to the MMN, and receives a response message that is sent by the MMN for the third information request message, where the response message includes the third information.

S507: The first node 1 performs terminating access domain selection information re-decision.

The first node 1 performs terminating access domain selection information re-decision, that is, the first decision function. When the third information and/or the first information respectively determined by the MMN and/or the SMN do/does not need to be obtained, the first node determines the second information based on the locally stored third information and/or first information and the first decision function. When the third information and/or the first information respectively determined by the MMN and/or the SMN need/needs to be obtained, the first node determines the second information based on the newly obtained third information and/or the newly obtained first information (based on the locally stored information when one of the first information and the third information is not re-obtained) and the first decision function.

S508: The first node 1 sends a second terminating access domain selection response message to the SDMN.

Correspondingly, the SDMN receives the second terminating access domain selection response message sent by the first node 1, where the second terminating access domain selection response message includes the second information determined by the first node 1.

S509: The terminating access domain selection information is determined by the first node 2 in a procedure.

For the procedure of determining, by the first node 2, the terminating access domain selection information, refer to the procedure of determining, by the first node 1, the terminating access domain selection information. For brevity, details are not described again.

S510: The SDMN performs terminating access domain selection response message re-decision.

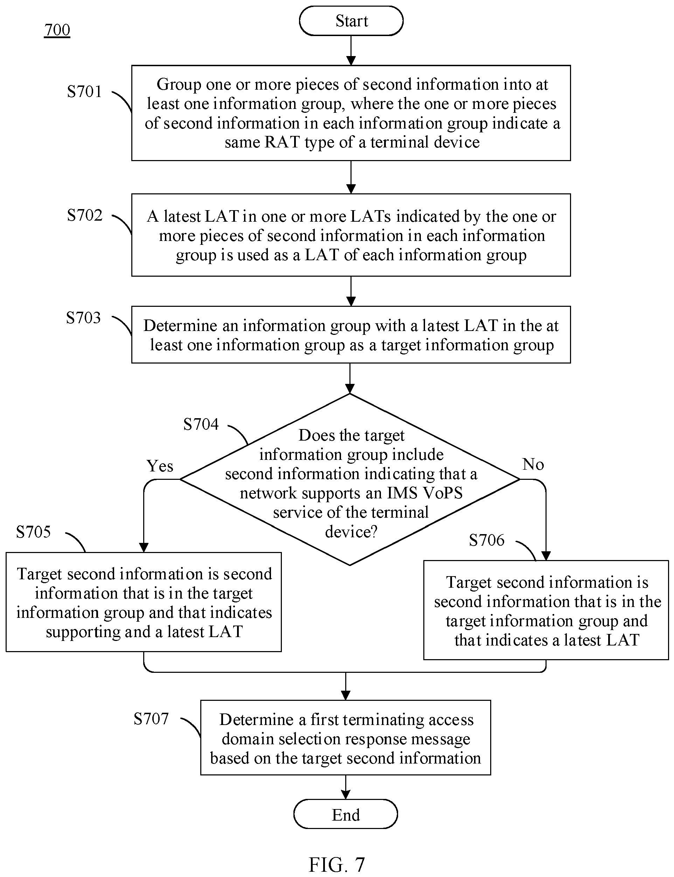

FIG. 7 is a schematic flowchart of performing, by an SDMN, terminating access domain selection response message re-decision.

S701: The SDMN groups one or more pieces of second information into at least one information group, where pieces of second information in each information group indicate a same RAT type of the terminal device.

The SDMN groups, based on the RAT type of the terminal device, one or more pieces of second information received from one or more first nodes into at least one information group.

Optionally, the SDMN may group the one or more pieces of second information into the at least one information group based on RAT type grouping information of the terminal device. One information group corresponds to one RAT type group.

S702: A latest LAT in one or more LATs indicated by the pieces of second information in each information group is used as a LAT of each information group.

The LAT of each of the at least one information group is a latest LAT in one or more LATs indicated by one or more pieces of second information in each information group.

S703: The SDMN determines an information group with a latest LAT in the at least one information group as a target information group.

The SDMN determines one target information group in the at least one information group, where the target information group is an information group with a latest LAT in the at least one information group.

S704: The SDMN determines whether the target information group includes second information indicating that the network supports the IMS UoPS service of the terminal device.

S705: When determining in S704 that the target information group includes the second information indicating that the IMS VoPS service of the terminal device is supported, the SDMN determines, as target second information, second information that is in the target information group and that indicates supporting and a latest LAT.

S706: When determining in S704 that the target information group does not include the second information indicating that the IMS UoPS service of the terminal device is supported, the SDMN determines, as target second information, second information that is in the target information group and that indicates a latest LAT.

S707: The SDMN determines a first terminating access domain selection response message based on the target second information.

The first terminating access domain selection response message includes one or more of the following information elements:
a tenth information element, indicating a RAT type of the terminal device;
an eleventh information element, indicating a LAT of the terminal device; and
a twelfth information element, indicating whether a network supports the IMS VoPS service of the terminal device.

The tenth information element, the eleventh information element, and the twelfth information element respectively correspond to the fourth information element, the fifth information element, and the sixth information element that are in the target second information. Information elements corresponding to each other indicate same content. In other words, the RAT type indicated by the tenth information element is the same as the RAT type indicated by the fourth information element in the target second information. The eleventh information element and the fifth information element that is in the target second information indicate a same LAT. The twelfth information element and the sixth information element that is in the target second information indicate a same result of whether the network supports the IMS UoPS service of the terminal device. To be specific, if the sixth information element indicates supporting, the twelfth information element also indicates supporting. If the sixth information element indicates not supporting, the twelfth information element also indicates not supporting.

S511: The SDMN sends the first terminating access domain selection response message to the TAS.

Correspondingly, the TAS receives the first terminating access domain selection response message sent by the SDMN.

According to the foregoing solution, when a terminating access domain of a terminal device is selected, the first node performs the first decision function, and a status of a session established by the terminal device, a working status of a P-CSCF, and the like that are sensed by an SMN are considered, to improve accuracy of terminating access domain selection of the terminal device.

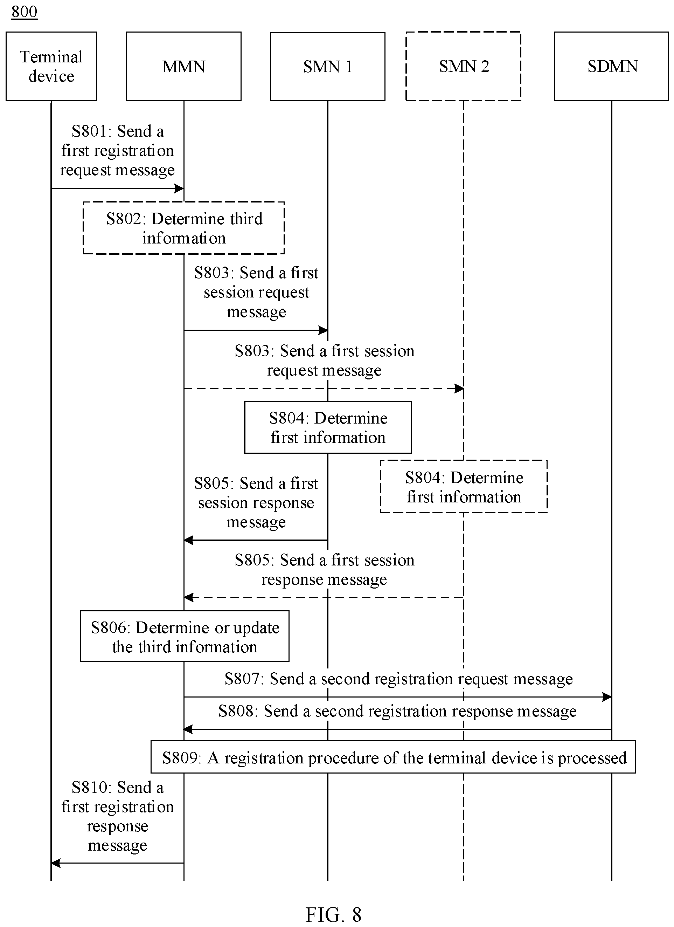

FIG. 8 is a schematic flowchart of a registration procedure of a terminal device according to an embodiment of this application.

S810: The terminal device sends a first registration request message to an MMN.

The MMN receives the first registration request message sent by the terminal device, and the terminal device may send the first registration request message to the MMN via an ANN 1.

Optionally, the first registration request message includes RAT group information. The first RAT group information indicates a RAT type supported by the terminal device and/or a RAT type in which the terminal device may simultaneously perform a plurality of connections.

For example, the first RAT group information indicates RAT 1, RAT 2, and RAT 3. This indicates that the terminal device supports three types of RATs: RAT 1, RAT 2, and RAT 3.

For another example, the first RAT group information indicates {RAT 1, RAT 2} and {RAT 3}, to be specific, the first RAT group information indicates two RAT type groups, where a first group is {RAT 1, RAT 2} and a second group is {RAT 3}. The terminal device may simultaneously perform a plurality of connections by using RAT types in a same group, and does not support simultaneously performing a plurality of connections by using RAT types in different groups. In other words, the first RAT group information indicates that the terminal device supports three types of RATs: RAT 1, RAT 2, and RAT 3. In addition, this indicates that the terminal device may support simultaneously performing a plurality of connections by using RAT 1 and RAT 2, and perform single-connection by using RAT 3. The terminal device does not support simultaneously performing a plurality of connections by using RAT 1 and RAT 3, or simultaneously performing a plurality of connections by using RAT 2 and RAT 3.

After receiving the first registration request message, the MMN may adjust RAT groups for the terminal device based on a capability of a network. For example, in the foregoing example, if the network does not support the terminal device in performing dual-connection by using RAT 1 and RAT 2, the MMN adjusts the RAT groups to {RAT 1}, {RAT 2}, and {RAT 3} for the terminal device.

Optionally, the MMN may send second RAT group information to an SDMN, where the second RAT group information includes RAT group information of the terminal device that is determined by an MMN 1. In this way, the SDMN determines or adjusts the RAT group information of the terminal device.

By way of example, and not limitation, the second RAT group information may be included in a second registration request message sent by the MMN to the SDMN in S807.

Optionally, after receiving the second RAT group information, the SDMN may determine, based on the capability of the network determined by the SDMN, whether the RAT group information of the terminal device is appropriate, and adjust the RAT group information when the RAT group information is inappropriate. Optionally, the SDMN sends third RAT group information to the MMN 1, where the third RAT group information includes RAT group information of the terminal device that is determined by the SDMN.

By way of example, and not limitation, the third RAT group information may be included in a second registration request respond message sent by the SDMN to the MMN in S808.

Optionally, in S802, the MMN determines third information.

The MMN may determine, based on the first registration request message sent by the terminal device, the third information, namely, information that is determined by the MMN and that is for terminating access domain selection of the terminal device.

Optionally, a ninth information element may be determined based on registration request information of the terminal device and/or a RAT type of the terminal device that is adjusted by the MMN. An eighth information element is determined based on a LAT of the terminal device that is recorded by the MMN.

Optionally, a manner in which the MMN determines a seventh information element may include but is not limited to the following two implementations.

In an implementation, the MMN may determine the seventh information element based on a second decision condition set, where the second decision condition set includes one or more of the following conditions.

### Condition 1: The terminal device is in a registered state.

For example, the MMN may sense, via a service procedure, that the terminal device is in a registered state because of successful registration, or in a deregistered state because of successful deregistration. However, this application is not limited thereto.

### Condition 2: The MMN supports the IMS VoPS service.

For example, the MMN may determine, based on a local configuration of the MMN, whether the MMN supports the IMS VoPS service.

### Condition 3: The terminal device supports the IMS VoPS service.

For example, the first registration request message includes information about whether the terminal device supports the IMS VoPS service, and the MMN determines, based on the first registration request message, whether the terminal device supports the IMS UoPS service.

### Condition 4: An ANN connected to the terminal device supports the IMS UoPS service.

### Condition 5: The terminal device has IMS APN subscription data.

For example, the MMN may obtain related information through S809 registration procedure processing, to determine whether the condition 4 and the condition 5 are met. However, this application is not limited thereto.

By way of example, and not limitation, the first decision condition set may be set by a local policy of the SMN.

The seventh information element may indicate one or more of the following cases: The network supports the IMS UoPS service of the terminal device; the network does not support the IMS UoPS service of the terminal device; or it is not determined whether the network supports the IMS UoPS service of the terminal device.

For example, all conditions in the second decision condition set are met, and the seventh information element indicates that the network supports the IMS UoPS service of the terminal device. For example, the seventh information element may indicate supporting (Support or S). Alternatively, the seventh information element may be a bit or a bit string, and a predefined value indicates that a network device supports the IMS VoPS service of the terminal device. For example, when the seventh information element indicates " 11", it indicates that the network supports the IMS VoPS service of the terminal device. However, this application is not limited thereto.

For another example, at least one condition in the second decision condition set is not met, and the seventh information element indicates that the network does not support the IMS VoPS service of the terminal device. For example, the seventh information element may indicate not supporting (not support or NS). Alternatively, the seventh information element may be a bit or a bit string, and a predefined value indicates that a network device supports the IMS UoPS service of the terminal device. For example, when the seventh information element indicates "01", it indicates that the network supports the IMS VoPS service of the terminal device. However, this application is not limited thereto.

For another example, it is not determined whether at least one condition in the second decision condition set is met, and the seventh information element indicates that it is not determined whether the network supports the IMS VoPS service of the terminal device. For example, the seventh information element may indicate unknown (unknown or UN). Alternatively, the seventh information element may be a bit or a bit string, and a predefined value indicates that a network device supports the IMS UoPS service of the terminal device. For example, when the seventh information element indicates "00", it indicates that the network supports the IMS VoPS service of the terminal device. However, this application is not limited thereto.

In another implementation, the MMN determines, based on a local decision configuration, whether to consider a session establishment status of the terminal device.

Optionally, when the local decision configuration indicates to consider the session establishment status of the terminal device, the seventh information element may be determined based on the following cases.

If all the conditions in the second decision condition set are met and the terminal device has established an IMS session, the seventh information element indicates that the network supports the IMS UoPS service of the terminal device.

If all the conditions in the second decision condition set are met, but the terminal device has not established an IMS session, the seventh information element indicates that the network does not support the IMS UoPS service of the terminal device.

In another case, the MMN determines, depending on whether the conditions in the second decision condition set are met, whether the network supports the IMS VoPS service of the terminal device. For a specific implementation, refer to the descriptions in the foregoing implementation. For brevity, details are not described herein again.

Optionally, when the local decision configuration indicates not to consider the session establishment status of the terminal device, the MMN 1 may determine the seventh information element based on the second decision condition set. For a specific implementation, refer to the descriptions in the foregoing implementation. For brevity, details are not described herein again.

S803: The MMN sends a first session request message to an SMN 1 and/or an SMN 2.

Correspondingly, the SMN 1 and/or the SMN 2 receive/receives the first session request message.

By way of example, and not limitation, the first session request message may be one or more of the following messages:
a session establishment request message, a session update request message, or a session deletion request message

The session establishment request message may be for requesting the SMN to establish a session for the terminal device. The session update request message may be for requesting the SMN to update a session of the terminal device. The session deletion request message may be for requesting the SMN to delete a session of the terminal device or release a session of the terminal device.

By way of example, and not limitation, the first session request message includes the RAT type used by the terminal device.

It should be understood that time points at which the MMN sends the first session request message to the SMN 1 and the SMN 2 may be the same or may be different. This is not limited in this application.

S804: The SMN 1 and/or the SMN 2 determine/determines first information.

The SMN 1 may determine first information corresponding to the SMN 1 based on session-related information of the terminal device that is recorded in the SMN 1, and/or the SMN 2 may determine first information corresponding to the SMN 2 based on session-related information of the terminal device that is recorded in the SMN 2. For a specific manner of determining the first information by the SMN, refer to the foregoing descriptions. For brevity, details are not described herein again.

It should be understood that time points at which the SMN 1 and the SMN 2 determine the first information may be the same or may be different. This is not limited in this application.

S805: The SMN 1 and/or the SMN 2 send/sends a first session response message to the MMN.

The MMN receives the first session response message sent by the SMN 1 and/or the SMN 2. The first session response message is a response message for the first session request message. For example, the first session request message is a session establishment request message, and the first session response message is a response message for the session establishment request. For another example, the first session request message is a session update request message, and the first session response message is a response message for the session update request. For still another example, the first session request message is a session deletion request message, and the first session response message is a response message for the session deletion request.

It should be understood that the MMN sends the first session response message to the SMN 1 and the SMN 2. This is not limited in this application.

S806: The MMN determines or updates the third information.

Optionally, one or more events trigger the MMN to update the third information. For example, the MMN 1 may be triggered to update the third information because the RAT type of the terminal device changes or a meeting status of the conditions in the second decision condition set changes. For example, because the IMS APN subscription data of the terminal device is deleted, and the condition 5 in the second decision condition set is not met, the MMN is triggered to update the third information.

S807: The MMN sends the second registration request message to the SDMN.

Correspondingly, the SDMN receives the second registration request message sent by the MMN.

Optionally, the second registration request message may include the second RAT group information of the terminal device that is determined in S801 or adjusted by the MMN. After receiving the second RAT group information, the SDMN may determine, based on the capability of the network determined by the SDMN, whether the second RAT group information of the terminal device is appropriate, and adjust the RAT group information when the second RAT group information is inappropriate.

S808: The SDMN sends the second registration request response message to the MMN.

Correspondingly, the MMN receives the second registration response message sent by the SDMN.

Optionally, the second registration response message may include the third RAT group information, and the third RAT group information is RAT group information of the terminal device that is adjusted by the SDMN. Alternatively, the second registration response message includes acknowledgment information, where the acknowledgment information is for acknowledging that the network supports the second RAT group information of the terminal device.

S809: A registration procedure of the terminal device is processed.

S810: The MMN sends a first registration response message to the terminal device.

Optionally, the first registration response message may include RAT group information adjusted by a network device. The RAT group information may be the second RAT group information adjusted by the MMN or the third RAT group information adjusted by the SDMN. Alternatively, the first registration response message may include acknowledgment information, where the acknowledgment information is for acknowledging that the network supports the first RAT group information of the terminal device.

In this application, the first node may be an MMN, an SMN, or an SDMN in a network. In other words, the first decision function may be performed by an MMN, an SMN, or an SDMN in a network device. Alternatively, the first node may be a newly added node in the network. The first decision function in this application may be implemented in, but is not limited to, the following implementations.

Manner 1: The first node is an MMN, and the MMN performs the foregoing first decision function.

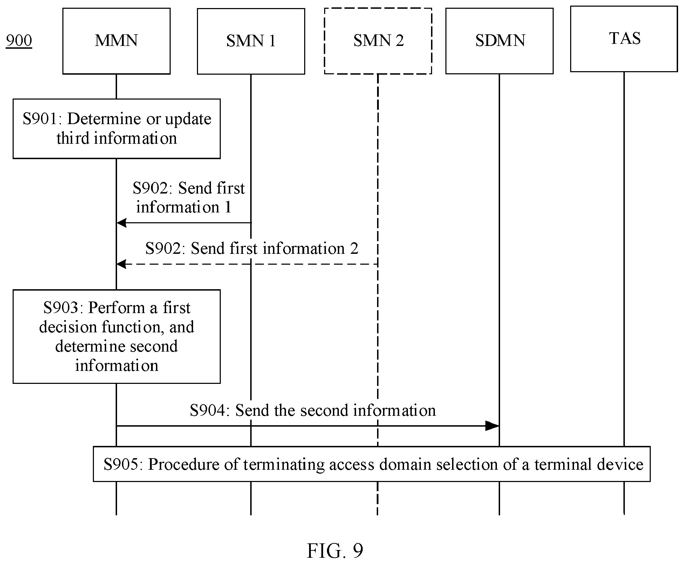

FIG. 9 is a schematic flowchart in which an MMN is used as a first node according to an embodiment of this application.

It should be understood that FIG. 9 is described by using an example in which a network includes one MMN and two SMNs. However, this application is not limited thereto. In a specific implementation, this may be extended to a case in which the network includes one or more SMNs.

S901: The MMN determines or updates third information.

For a specific implementation in which the MMN determines or updates the third information, refer to S502 or S506 in FIG. 5. For brevity, details are not described herein again.

S902: An SMN 1 and/or an SMN 2 send/sends first information to the MMN.

The MMN receives the first information (namely, first information 1) determined by the SMN 1, and the MMN receives the first information (namely, first information 2) determined by the SMN 2.

The SMN may establish and determine the first information for the terminal device (for example, S804 in FIG. 8), and then send the first information to the MMN.

Optionally, the first information may be included in a first session response message sent by the SMN to the MMN. However, this application is not limited thereto.

Alternatively, the SMN may send updated first information to the MMN after updating the first information.

Optionally, the SMN may be triggered to update the first information for one or more of the following reasons. However, this application is not limited thereto.

A meeting status of conditions in a first decision condition set changes, a new session is established, a session is deleted, or the SMN senses a P-CSCF fault.

By way of example, and not limitation, the SMN sends a session update message to the MMN, where the session update message includes the first information.

S903: The MMN performs a first decision function.

In other words, the MMN determines second information based on obtained N pieces of first information and/or the third information, where N is an integer greater than 0. For a specific implementation, refer to the descriptions of performing the first decision function by the first node in FIG. 3 or FIG. 4. For brevity, details are not described herein again.

S904: The MMN sends the second information to an SDMN.

The SDMN receives the second information sent by the MMN.

Optionally, the second information may be included in a second registration request message sent by the MMN to the SDMN, or the second information may be included in a second information update request message sent by the MMN to the SDMN.

For example, the MMN may notify, in the second registration request message of the terminal device for the first time, the SDMN of the second information determined by the MMN. In addition, after the second information is updated, the MMN may notify the SDMN of updated second information via the second information update request message. However, this application is not limited thereto.

S905: Terminating access domain selection of the terminal device is performed in a procedure.

When the terminal device has an IMS UoPS mobile terminated service, a PS network performs a procedure of terminating access domain selection of the terminal device shown in FIG. 5. In addition, the PS network may further include other RAT networks (to be specific, other MMNs, an SMN 3, and the like), and corresponding processing procedures are the same as or similar to that in FIG. 9. Reference may be made to the descriptions in FIG. 9. For brevity, details are not described herein again. In S905, the SDMN performs terminating access domain selection decision based on second information provided by all connected RAT networks, and determines a first terminating access domain selection response message.

### Manner 2: The first node is an SMN.

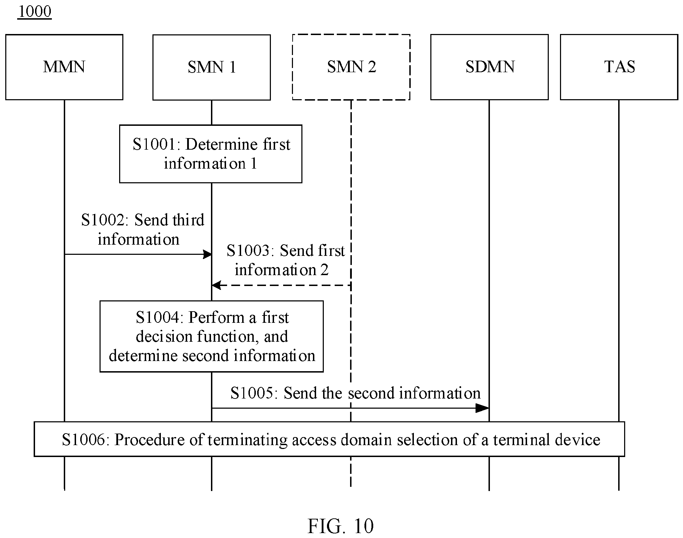

FIG. 10 is a schematic flowchart in which an SMN is used as a first node according to an embodiment of this application.

It should be understood that FIG. 10 is described by using an example in which a network includes one MMN and two SMNs. However, this application is not limited thereto. In a specific implementation, this may be extended to a case in which the network includes one or more SMNs. In addition, for a part in this embodiment that is the same as or similar to that in the foregoing embodiment, refer to the descriptions in the foregoing embodiment. For brevity, details are not described herein again.

S1001: An SMN 1 determines first information.

S1002: The MMN sends third information to the SMN 1.

Optionally, the third information is included in a first session request message (for example, the first session request message in S503 in FIG. 5) sent by the MMN to the SMN 1.

S1003: An SMN 2 sends first information to the SMN 1.

S1004: The SMN 1 performs a first decision function, to determine second information.

The SMN 1 determines the second information based on the third information and/or N-1 pieces of first information, where the N-1 pieces of first information are sent to the SMN 1 by an SMN except the SMN 1 in the network (for example, the first information 1 sent by the SMN 2 to the SMN 1), and N is an integer greater than 0. For a specific implementation of determining the second information, refer to the foregoing descriptions of performing the first decision function by the first node. For brevity, details are not described herein again.

S1005: The SMN 1 sends the second information to an SDMN.

Optionally, the SMN 1 sends a third registration request message of the terminal device to the SDMN, where the third registration request message is for requesting to register the terminal device. In other words, when the SMN 1 is the first node, in the embodiment shown in FIG. 5, the MMN does not perform S507, but the SMN 1 sends the registration request message of the terminal device to the SDMN. Optionally, the third registration request message includes the second information.

Optionally, the SMN 1 sends a second information update request message to the SDMN, where the second information update request message includes the second information. After updating the second information, the SMN 1 may send the second information update request message to the SDMN, to notify the SDMN of updated second information. The SMN 1 may update the information after receiving updated third information or the first information. However, this application is not limited thereto.

S1006: Terminating access domain selection of the terminal device is performed in a procedure.

When the terminal device has an IMS UoPS mobile terminated service, a PS network performs a procedure of terminating access domain selection of the terminal device shown in FIG. 5. In addition, the PS network may further include other RAT networks (to be specific, other MMNs, an SMN 3, and the like), and corresponding processing procedures are the same as or similar to that in FIG. 10. Reference may be made to the descriptions in FIG. 10. For brevity, details are not described herein again. In S1005, the SDMN performs terminating access domain selection decision based on second information provided by all connected RAT networks, and determines a first terminating access domain selection response message.

Manner 3: The first node is an SDMN.

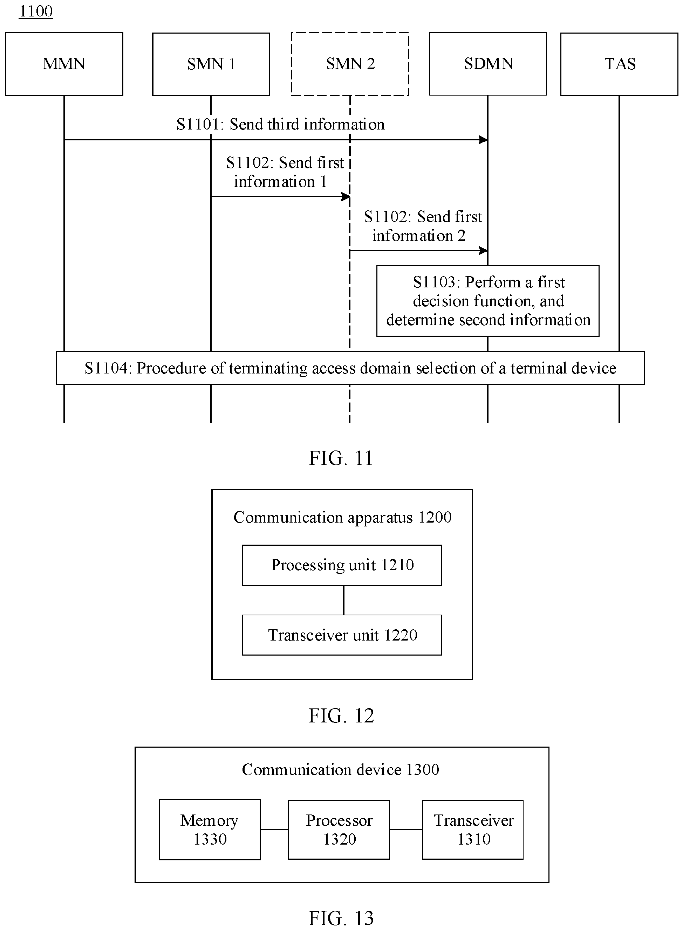

FIG. 11 is a schematic flowchart in which an SDMN is used as a first node according to an embodiment of this application.

It should be understood that FIG. 7 is described by using an example in which a network includes one MMN and two SMNs. However, this application is not limited thereto. In a specific implementation, this may be extended to a case in which the network includes one or more SMNs. In addition, for a part in this embodiment that is the same as or similar to that in the foregoing embodiment, refer to the descriptions in the foregoing embodiment. For brevity, details are not described herein again.

S1101: The MMN sends third information to the SDMN.

S1102: An SMN 1 and/or an SMN 2 send/sends first information to the SDMN.

S1103: The SDMN performs a first decision function, to determine second information.

In this embodiment, the SDMN is the first node, and both the third information determined by the MMN and the first information determined by the SMN are sent to the SDMN. In S1103, the SDMN performs the first decision function based on the third information received in S 1101 and the first information received in S 1 102, to determine second information corresponding to a RAT network in which the MMN, the SMN 1, and the SMN 2 are located, or second information corresponding to another RAT network that is connected when the SDMN executes a same procedure.

S1104: Terminating access domain selection of the terminal device is performed in a procedure.

When the SDMN is the first node, a process of interaction between the SDMN and the first node in the procedure of determining the terminating access domain selection information of the first node shown in FIG. 5 is an internal execution process of the SDMN, and signaling interaction between the first node and the MMN and between the first node and the SMN is executed by the SDMN, the MMN, and the SMN. In addition, a PS network may further include other RAT networks (to be specific, other MMNs, an SMN 3, and the like), and corresponding processing procedures are the same as or similar to that in FIG. 11. Reference may be made to the descriptions in FIG. 11. For brevity, details are not described herein again. In S1104, the SDMN performs terminating access domain selection decision based on second information corresponding to all connected RAT networks, and determines a first terminating access domain selection response message.

It should be understood that sequence numbers of the processes do not mean execution sequences in the foregoing embodiments. The execution sequences of the processes should be determined based on functions and internal logic of the processes, and should not be construed as any limitation on the implementation processes of embodiments of this application.

According to the foregoing solution, the first node may be a newly added node in a system, or may be a node in the SDMN, the MMN, or the SMN. When a terminating access domain of a terminal device is selected, the first node performs the first decision function, and a status of a session established by the terminal device, a working status of a P-CSCF, and the like that are sensed by an SMN are considered, to improve accuracy of terminating access domain selection of the terminal device. The methods according to embodiments of this application are described above in detail with reference to FIG. 2 to FIG. 11. The following describes in detail apparatuses and devices provided in embodiments of this application with reference to FIG. 12 and FIG. 13.

FIG. 12 is a schematic block diagram of a communication apparatus according to an embodiment of this application. As shown in FIG. 4, the communication apparatus 1200 may include a processing unit 1210 and a transceiver unit 1220.

In a possible design, the communication apparatus 1200 may correspond to the first node in the foregoing method embodiments, for example, may be the first node or a chip disposed in the first node.

It should be understood that the communication apparatus 1200 may correspond to the first node in the method 300 to the method 600 and the method 900 to the method 1100 in embodiments of this application. The communication apparatus 1200 may include a unit configured to perform the method performed by the first node in the method 300 to the method 600 and the method 900 to the method 1100. In addition, the units in the communication apparatus 1200 and the foregoing other operations and/or functions are separately intended to implement corresponding procedures of the first node in the method 300 to the method 600 shown in FIG. 3 to FIG. 6, and the method 900 to the method 1100 shown in FIG. 9 to FIG. 11.

It should be understood that a specific process in which the units perform the foregoing corresponding steps is described in detail in the foregoing method embodiments, and for brevity, details are not described herein again.

It should be further understood that when the communication apparatus 1200 is the first node, the transceiver unit 1220 in the communication apparatus 1200 may correspond to a transceiver 1310 in a first node 1300 shown in FIG. 13, and the processing unit 1210 in the communication apparatus 1200 may correspond to a processor 1320 in the first node 1300 shown in FIG. 13.

It should be further understood that when the communication apparatus 1200 is the chip disposed in the first node, the transceiver unit 1220 in the communication apparatus 1200 may be implemented by using a communication interface (for example, a transceiver or an input/output interface), for example, may correspond to the transceiver 1310 in the first node 1300 shown in FIG. 13. The processing unit 1210 in the communication apparatus 1200 may be implemented by using at least one processor, for example, may correspond to the processor 1320 in the first node 1300 shown in FIG. 13. Alternatively, the processing unit 1210 in the communication apparatus 1200 may be implemented by using at least one logic circuit.

Optionally, the communication apparatus 1200 may further include a processing unit 1210. The processing unit 1210 may be configured to process instructions or data, to implement a corresponding operation.

Optionally, the communication apparatus 1200 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein again.

In another possible design, the communication apparatus 1200 may correspond to the SMN in the foregoing method embodiments, for example, may be the SMN or a chip disposed in the SMN.

It should be understood that the communication apparatus 1200 may correspond to the SMN in the method 200 and the method 800 to the method 1100 according to embodiments of this application. The communication apparatus 1200 may include a unit configured to perform the method performed by the SMN in the method 200 and the method 800 to the method 1100. In addition, the units in the communication apparatus 1200 and the foregoing other operations and/or functions are separately intended to implement corresponding procedures in the method 200 in FIG. 2 and the method 800 to the method 1100 in FIG. 8 to FIG. 11.

It should be understood that a specific process in which the units perform the foregoing corresponding steps is described in detail in the foregoing method embodiments, and for brevity, details are not described herein again.

It should be further understood that when the communication apparatus 1200 is the SMN, the transceiver unit 1220 in the communication apparatus 1200 may correspond to a transceiver 1310 in an SMN 1300 shown in FIG. 13, and the processing unit 1210 in the communication apparatus 1200 may correspond to a processor 1320 in the SMN 1300 shown in FIG. 13.

It should be further understood that when the communication apparatus 1200 is the chip disposed in the SMN, the transceiver unit 1220 in the communication apparatus 1200 may be implemented by using a communication interface (for example, a transceiver or an input/output interface), for example, may correspond to the transceiver 1310 in the SMN 1300 shown in FIG. 13. The processing unit 1210 in the communication apparatus 1200 may be implemented by using at least one processor, for example, may correspond to the processor 1320 in the SMN 1300 shown in FIG. 13. Alternatively, the processing unit 1210 in the communication apparatus 1200 may be implemented by using at least one logic circuit.

Optionally, the communication apparatus 1200 may further include a processing unit 1210. The processing unit 1210 may be configured to process instructions or data, to implement a corresponding operation.

Optionally, the communication apparatus 1200 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein again.

In another possible design, the communication apparatus 1200 may correspond to the SDMN in the foregoing method embodiments, for example, may be the SDMN or a chip disposed in the SDMN.

It should be understood that the communication apparatus 1200 may correspond to the SDMN in the method 500 and the method 700 to the method 1100 according to embodiments of this application. The communication apparatus 1200 may include a unit configured to perform the method performed by the SDMN in the method 500 in FIG. 5 and the method 700 to the method 1100 in FIG. 7 to FIG. 11. In addition, the units in the communication apparatus 1200 and the foregoing other operations and/or functions are separately intended to implement corresponding procedures in the method 500 in FIG. 5 and the method 700 to the method 1100 in FIG. 7 to FIG. 11.

It should be understood that a specific process in which the units perform the foregoing corresponding steps is described in detail in the foregoing method embodiments, and for brevity, details are not described herein again.

It should be further understood that when the communication apparatus 1200 is the SDMN, the transceiver unit 1220 in the communication apparatus 1200 may correspond to a transceiver 1310 in an SDMN 1300 shown in FIG. 13, and the processing unit 1210 in the communication apparatus 1200 may correspond to a processor 1320 in the SDMN 1300 shown in FIG. 13.

It should be further understood that when the communication apparatus 1200 is the chip disposed in the SDMN, the transceiver unit 1220 in the communication apparatus 1200 may be implemented by using a communication interface (for example, a transceiver or an input/output interface), for example, may correspond to the transceiver 1310 in the SDMN 1300 shown in FIG. 13. The processing unit 1210 in the communication apparatus 1200 may be implemented by using at least one processor, for example, may correspond to the processor 1320 in the SDMN 1300 shown in FIG. 13. Alternatively, the processing unit 1210 in the communication apparatus 1200 may be implemented by using at least one logic circuit.

Optionally, the communication apparatus 1200 may further include a processing unit 1210. The processing unit 1210 may be configured to process instructions or data, to implement a corresponding operation.

Optionally, the communication apparatus 1200 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein again.

In another possible design, the communication apparatus 1200 may correspond to the MMN in the foregoing method embodiments, for example, may be the MMN or a chip disposed in the MMN.

It should be understood that the communication apparatus 1200 may correspond to the MMN in the method 800 to the method 1100 according to embodiments of this application. The communication apparatus 1200 may include a unit configured to perform the method performed by the MMN in the method 800 to the method 1100 in FIG. 8 to FIG. 11. In addition, the units in the communication apparatus 1200 and the foregoing other operations and/or functions are separately intended to implement corresponding procedures in the method 800 to the method 1100 in FIG. 8 to FIG. 11.

It should be understood that a specific process in which the units perform the foregoing corresponding steps is described in detail in the foregoing method embodiments, and for brevity, details are not described herein again.

It should be further understood that when the communication apparatus 1200 is the MMN, the transceiver unit 1220 in the communication apparatus 1200 may correspond to a transceiver 1310 in an MMN 1300 shown in FIG. 13, and the processing unit 1210 in the communication apparatus 1200 may correspond to a processor 1320 in the MMN 1300 shown in FIG. 13.

It should be further understood that when the communication apparatus 1200 is the chip disposed in the MMN, the transceiver unit 1220 in the communication apparatus 1200 may be implemented by using a communication interface (for example, a transceiver or an input/output interface), for example, may correspond to the transceiver 1310 in the MMN 1300 shown in FIG. 13. The processing unit 1210 in the communication apparatus 1200 may be implemented by using at least one processor, for example, may correspond to the processor 1320 in the MMN 1300 shown in FIG. 13. Alternatively, the processing unit 1210 in the communication apparatus 1200 may be implemented by using at least one logic circuit.

Optionally, the communication apparatus 1200 may further include a processing unit 1210. The processing unit 1210 may be configured to process instructions or data, to implement a corresponding operation.

Optionally, the communication apparatus 1200 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein again.

FIG. 13 is a schematic diagram of a structure of a communication device 1300 according to an embodiment of this application. The communication device 2000 may be used in the system shown in FIG. 1, and performs functions of the first node, the SMN, the MMN, or the SDMN in the foregoing method embodiments. As shown in the figure, the communication device 1300 includes a processor 1320 and a transceiver 1310. Optionally, the communication device 1300 further includes a memory 1330. The processor 1320, the transceiver 1310, and the memory 1330 may communicate with each other through an internal connection path, to transfer a control signal and/or a data signal. The memory 1330 is configured to store a computer program. The processor 1320 is configured to invoke the computer program from the memory 1330 and run the computer program, to control the transceiver 1310 to receive and send a signal.

The processor 1320 and the memory 1330 may be integrated into one processing apparatus. The processor 1320 is configured to execute program code stored in the memory 1330 to implement the foregoing functions. During specific implementation, the memory 1330 may alternatively be integrated into the processor 1320, or may be independent of the processor 1320. The processor 1320 may correspond to the processing unit in FIG. 12.

The transceiver 1320 may correspond to the transceiver unit in FIG. 12. The transceiver 1320 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the communication device 1300 shown in FIG. 13 can implement processes related to the first node, the SMN, the MMN, or the SDMN in the method embodiments shown in FIG. 2 to FIG. 11. Operations and/or functions of the modules in the communication device 2000 are separately intended to implement corresponding procedures in the foregoing method embodiments. For details, refer to the descriptions in the foregoing method embodiments. To avoid repetition, detailed descriptions are properly omitted herein.

The processor 1320 may be configured to perform an action that is implemented inside the first node, the SMN, the MMN, or the SDMN and that is described in the foregoing method embodiments. The transceiver 1310 may be configured to perform an action that the communication device sends to or receives from another node. For details, refer to the descriptions in the foregoing method embodiments. Details are not described herein again.

An embodiment of this application further provides a processing apparatus, including a processor and an interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system-on-a-chip (system-on-a-chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the methods in embodiments shown in FIG. 2 to FIG. 11.

According to the methods provided in embodiments of this application, this application further provides a computer-readable medium. The computer-readable medium stores program code. When the program code is run on a computer, the computer is enabled to perform the methods in embodiments shown in FIG. 2 to FIG. 11.

According to the methods provided in embodiments of this application, this application further provides a system. The system includes the foregoing one or more terminal devices and the foregoing one or more network devices.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending or receiving step may be performed by the processing unit (the processor). For a function of a specific unit, refer to a corresponding method embodiment. There may be one or more processors.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The network device and the terminal device in the foregoing apparatus embodiments completely correspond to the network device and the terminal device in the method embodiments. A corresponding module or unit performs a corresponding step. For example, the communication unit (the transceiver) performs a receiving or sending step in the method embodiments, and a step other than the sending or receiving step may be performed by the processing unit (the processor). For a function of a specific unit, refer to a corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A terminating access domain selection method, comprising:
obtaining, by a first node, N pieces of first information, wherein the N pieces of first information correspond to N session management network nodes SMNs, the first information is information that is determined by a corresponding SMN and that is for selecting a terminating access domain of a terminal device, and N is an integer greater than 0; and
determining, by the first node, second information based on the N pieces of first information, wherein the second information is information that is determined by the first node and that is for selecting the terminating access domain of the terminal device.

2. The method according to claim 1, wherein each of the N pieces of first information comprises one or more of the following:
a first information element, indicating whether a network supports a target service of the terminal device, wherein the target service is an internet protocol multimedia subsystem voice over packet switched session IMS UoPS service;
a second information element, indicating a radio access technology RAT type of the terminal device; and
a third information element, indicating a last access time LAT of the terminal device.

3. The method according to claim 2, wherein the second information element in each of the N pieces of first information indicates a first RAT type, and the determining, by the first node, second information based on the N pieces of first information comprises:
determining, by the first node, that a fourth information element in the second information indicates the first RAT type.

4. The method according to claim 2 or 3, wherein the determining, by the first node, second information based on the N pieces of first information comprises:
when a local policy of the first node indicates not to consider third information, determining, by the first node, the second information based on the N pieces of first information, wherein
the third information is information that is determined by a mobility management network node MMN and that is for selecting the terminating access domain of the terminal device.

5. The method according to claim 4, wherein the determining, by the first node, second information based on the N pieces of first information comprises:
determining, by the first node based on the third information element in the N pieces of first information, that a fifth information element in the second information indicates a first LAT, wherein the first LAT is a latest LAT in one or more LATs indicated by the third information element in the N pieces of first information.

6. The method according to claim 2 or 3, wherein the determining, by the first node, second information based on the N pieces of first information comprises:
when a local policy of the first node indicates to consider third information, and a seventh information element in the third information indicates that the network supports the target service of the terminal device, determining, by the first node, the second information based on the N pieces of first information and the third information, wherein
the third information is information that is determined by a mobility management network node MMN and that is for selecting the terminating access domain of the terminal device.

7. The method according to any one of claims 4 to 6, wherein the determining, by the first node, second information based on the N pieces of first information comprises:
when the N pieces of first information comprise the at least one first information element indicating that the network supports the target service of the terminal device, determining, by the first node, that a sixth information element in the second information indicates that the network supports the target service of the terminal device; or
when the N pieces of first information do not comprise the third information element indicating that the network supports the target service of the terminal device, determining, by the first node, that a sixth information element in the second information indicates that the network does not support the target service of the terminal device.

8. The method according to any one of claims 1 to 3, wherein the determining, by the first node, second information based on the N pieces of first information comprises:
when a local policy of the first node indicates to consider third information, and a seventh information element in the third information indicates that the network does not support the target service of the terminal device, determining, by the first node, the second information based on the N pieces of first information and the third information, wherein
the third information is information provided by a mobility management network node MMN for selecting the terminating access domain of the terminal device.

9. The method according to claim 8, wherein the seventh information element in the third information indicates that the network does not support the target service of the terminal device, and the determining, by the first node, the second information based on the N pieces of first information and the third information comprises:
determining, by the first node, that a sixth information element in the second information indicates that the network does not support the target service of the terminal device.

10. The method according to claim 6, 8, or 9, wherein the determining, by the first node, the second information based on the N pieces of first information and the third information comprises:
determining, by the first node based on the third information element in the N pieces of first information and an eighth information element in the third information, that the fourth information element in the second information indicates a second LAT, wherein the eighth information element indicates the LAT of the terminal device determined by an MMN device, and the second LAT is a latest LAT in one or more LATs that are indicated by the third information element in the N pieces of first information and the eighth information element in the third information.

11. The method according to any one of claims 1 to 8, wherein the first node is an MMN, and the obtaining, by a first node, N pieces of first information comprises:
receiving, by the MMN, the first information sent by each of the N SMNs.

12. The method according to any one of claims 1 to 8, wherein the first node is a first SMN in the N SMNs, and the obtaining, by a first node, N pieces of first information comprises:
receiving, by the first SMN, the first information sent by each of the N SMNs except the first SMN; and
determining, by the first SMN, the first information corresponding to the first SMN.

13. The method according to claim 11 or 12, wherein the method further comprises:
sending, by the first node, the second information to a subscriber data management network node SDMN.

14. The method according to any one of claims 1 to 8, wherein the first node is an SDMN, and the obtaining, by a first node, N pieces of first information comprises:
receiving, by the SDMN, the first information sent by each of the N SMNs.

15. A terminating access domain selection apparatus, comprising:
a transceiver unit, configured to receive N pieces of first information, wherein the N pieces of first information correspond to N session management network nodes SMNs, the first information is information that is determined by a corresponding SMN and that is for selecting a terminating access domain of a terminal device, and N is an integer greater than 0; and
a processing unit, configured to determine second information based on the N pieces of first information, wherein the second information is information that is determined by the terminating access domain selection apparatus and that is for selecting the terminating access domain of the terminal device.

16. The apparatus according to claim 15, wherein each of the N pieces of first information comprises one or more of the following:
a first information element, indicating whether a network supports a target service of the terminal device, wherein the target service is an internet protocol multimedia subsystem voice over packet switched session IMS VoPS service;
a second information element, indicating a radio access technology RAT type of the terminal device; and
a third information element, indicating a last access time LAT of the terminal device.

17. The apparatus according to claim 16, wherein each of the N pieces of first information comprises the first information element; and
the processing unit is specifically configured to determine that a fourth information element in the second information indicates the first RAT type.

18. The apparatus according to claim 16 or 17, wherein a local policy of the communication apparatus indicates not to consider third information; and
the processing unit is specifically configured to determine the second information based on the N pieces of first information, wherein
the third information is information that is determined by a mobility management network node MMN and that is for selecting the terminating access domain of the terminal device.

19. The apparatus according to claim 18, wherein
the processing unit is specifically configured to determine, based on the third information element in the N pieces of first information, that a fifth information element in the second information indicates a first LAT, wherein the first LAT is a latest LAT in one or more LATs indicated by the third information element in the N pieces of first information.

20. The apparatus according to claim 16 or 17, wherein a local policy of the communication apparatus indicates to consider third information, and a seventh information element in the third information indicates that the network supports the target service of the terminal device; and
the processing unit is specifically configured to determine the second information based on the N pieces of first information and the third information, wherein
the third information is information that is determined by a mobility management network node MMN and that is for selecting the terminating access domain of the terminal device.

21. The apparatus according to any one of claims 18 to 20, wherein
the N pieces of first information comprise the at least one first information element indicating that the network supports the target service of the terminal device, and the processing unit is specifically configured to determine that a sixth information element in the second information indicates that the network supports the target service of the terminal device; or
the N pieces of first information do not comprise the third information element indicating that the network supports the target service of the terminal device, and the processing unit is specifically configured to determine that a sixth information element in the second information indicates that the network does not support the target service of the terminal device.

22. The apparatus according to any one of claims 15 to 17, wherein a local policy of the first node indicates to consider third information, and a seventh information element in the third information indicates that the network does not support the target service of the terminal device; and
the processing unit is specifically configured to determine the second information based on the N pieces of first information and the third information, wherein
the third information is information provided by a mobility management network node MMN for selecting the terminating access domain of the terminal device.

23. The apparatus according to claim 22, wherein the seventh information element in the third information indicates that the network does not support the target service of the terminal device; and
the processing unit is specifically configured to determine that a sixth information element in the second information indicates that the network does not support the target service of the terminal device.

24. The apparatus according to claim 20, 22, or 23, wherein
the processing unit is specifically configured to determine, based on the third information element in the N pieces of first information and an eighth information element in the third information, that the fourth information element in the second information indicates a second LAT, wherein the eighth information element indicates the LAT of the terminal device determined by an MMN device, and the second LAT is a latest LAT in one or more LATs that are indicated by the third information element in the N pieces of first information and the eighth information element in the third information.

25. The apparatus according to any one of claims 15 to 22, wherein the communication apparatus is disposed in an MMN; and
the transceiver unit is specifically configured to receive the first information sent by each of the N SMNs.

26. The apparatus according to claim 25, wherein
the transceiver unit is further configured to send the second information to a subscriber data management network node SDMN.

27. The apparatus according to any one of claims 15 to 24, wherein the communication apparatus is disposed in an SDMN; and
the transceiver unit is specifically configured to receive the first information sent by each of the N SMNs.

28. A communication apparatus, comprising at least one processor, wherein the at least one processor is configured to perform the method according to any one of claims 1 to 14.

29. A computer-readable medium, comprising a computer program, wherein when the computer program is run on a computer, the computer is enabled to perform the method according to any one of claims 1 to 14.
